# EUROPEAN PATENT SPECIFICATION

(11) **EP 4 283 508 B1**
(45) Date of publication and mention of the grant of the patent: **09.12.2026**
(21) Application number: 23172246.3
(22) Date of filing: 09.05.2023
(51) Int. Cl.: G06F 21/77, G07F 7/10, G06Q 20/34

(54) **METHOD FOR INTRODUCING PERSONALIZATION DATA IN NON VOLATILE MEMORIES OF A PLURALITY OF INTEGRATED CIRCUITS, IN PARTICULAR IN INTEGRATED CIRCUIT CARDS, CORRESPONDING SYSTEM AND COMPUTER PROGRAM PRODUCT**
VERFAHREN ZUM EINBRINGEN VON PERSONALISIERUNGSDATEN IN NICHTFLÜCHTIGE SPEICHER EINER VIELZAHL VON INTEGRIERTEN SCHALTUNGEN, INSBESONDERE IN IC-KARTEN, SOWIE ENTSPRECHENDES SYSTEM UND COMPUTERPROGRAMMPRODUKT
PROCÉDÉ D'INTRODUCTION DE DONNÉES DE PERSONNALISATION DANS DES MÉMOIRES NON VOLATILES D'UNE PLURALITÉ DE CIRCUITS INTÉGRÉS, EN PARTICULIER DANS DES CARTES À CIRCUITS INTÉGRÉS

(30) Priority: 26.05.2022 IT 202200011084
(43) Date of publication of application: 29.11.2023
(73) Proprietor: STMicroelectronics S.r.l., 20864 Agrate Brianza (MB) (IT)
(72) Inventor: ALFARANO, Marco, 80078 Pozzuoli (Napoli) (IT); MASSASCUSA, Sofia, 81100 Caserta (IT)
(74) Representative: Buzzi, Notaro & Antonielli d'Oulx S.p.A.

(56) References cited:
- EP-A1- 3 547 729
- US-A1- 2021 096 178

## Description

### Technical Field

Embodiments of the present disclosure relate to solutions for introducing personalization data in non-volatile memories of a plurality of integrated circuits comprising secure elements, by storing Token Non-Volatile Memory Images, writing in the non-volatile memory of a given integrated circuit a static data image, corresponding to an invariant part of non-volatile memory common to said plurality of integrated circuit cards including an operating system, and writing in the static data image a set of personalization data representing data specific of the given integrated circuit card, said set of personalization data comprising at least a subset of unpredictable personalization data which storing location and/or form of coding in said static data image is not known.

Embodiments of the present disclosure relate in particular to secure elements, such as embedded secure elements and integrated circuit cards, produced with WLCSP (Wafer Level Chip Scale Packaging) techniques, in particular integrated circuits for UICC (Universal Integrated Circuit Card) and more in particular to embedded UICC (eUICC).

### Background

The solution refers to generation of batches of integrated circuits comprising secure elements. With the expression 'secure element' is here referred to an integrated circuit, i.e., a chip, that is by design protected from unauthorized access and used to run a limited set of applications, as well as store confidential and cryptographic data are here comprised, in particular are considered secure elements UICC, eSE (embedded Secure Element), eUICC, iUICC (integrated UICC), SSP (Smart Secure Platform) architecture based. Each secure element, in particular an integrated circuit card such as eUICC, in the batch may be personalized with the introduction of personalization data (sometimes referred to as "perso data"), e.g., encryption keys or identifiers, specific for each integrated circuit card.

Under this view, WLCSP, Wafer Level Chip Scale Packaging, also referred to as Wafer-Level packaging (WLP) or Chip Scale Packaging (CSP) is a known technology for packaging an integrated circuit while still part of the wafer. Such a wafer level processing is in contrast to conventional methods of slicing the wafer into individual circuits (e.g., a chip or a die) and then packaging them. WLCSP is truly a chip-scale package since the resulting package is the same size as the die. A WLCSP package usually includes the integrated circuit die, a possible redistribution Layer (RDL) and solder balls or bumps. The redistribution Layer is required to route from peripherally located bond wire pads to a grid array of CSP pad locations. WLCSP can be a good choice for small pin count devices as a way to optimize area and cost. Alternatively, the integrated circuit can be laid out with bond-wire I/O pads on the periphery of the integrated circuit. A redistribution Layer can then be applied to the integrated circuit to redistribute the CSP ball pads to the desired grid spacing.

In the field of secure elements for some application such as telecom, banking, identification and authentication, which mainly are introduced in integrated circuit card, the integrated circuit modules cannot be identical: they have to be diversified by a personalization operation to include a respective unique identifier and/or encryption keys and other personalization data.

Usually, to produce an eUICC (embedded Universal Integrated Circuit Card) the OEM (Original Equipment Manufacturer) and/or the MNO (Mobile Network Operator) requires to the EUM (eUICC Manufacturer) a batch of integrated circuit modules for mobile connectivity.

In figure 1 it is shown a flow diagram exemplary of a method 100 for introducing personalization data in non volatile memories of a plurality of integrated circuits, which are specifically eUICCs produced by WLCSP.

In figure 2 are shown schematics of an embodiment 50 of a system for introducing personalization data in non volatile memories of a plurality of integrated circuits, which can implement the method 100.

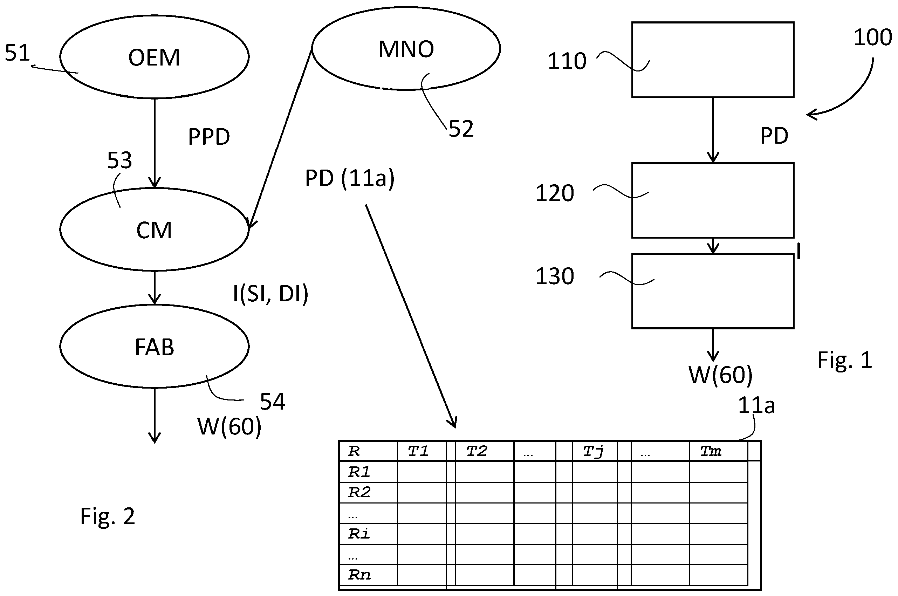

Thus, with reference to figures 1 and 2, in a first step 110 a Mobile Network Operator 52 sends to a Chip Manufacturer 53 an input file PD with personalization data, for instance a personalization data table 11a as shown in figure 2, to generate personalization data (e.g. IMSI (International Mobile Subscriber Identity), ICCID (Integrated Circuit Card Identification Number), RSA/ECC certificate, encryption keys and other identifiers, certificates or keys specific of a specific card/chip). The Chip Manufacturer 53, which usually corresponds to the card vendor for integrated cards like the eUICC, may also receive from an Equipment User Manufacturer 51, i.e., the entity which has requested the plurality of integrated circuits, or the same MNO 52, pre-personalization data PPD, which includes for instance third party applets, bundles, software profiles and other data which are common to the plurality of integrated circuits and form a static image SI, i.e. a data image, to be stored in the non-volatile memory of the integrated circuit.

The data table 11a, as shown in figure 2, may include a plurality of records R₁...Rₙ, corresponding to the rows of the table 11a. Each i-th record Rᵢ corresponds to a determined i-th integrated circuit card 60 in a set or batch comprising a number n of card 60 to be personalized.

Each column of the personalization data table 11a include then a personalization field T₁... Tⱼ ...Tₘ, m being the number of fields in the table 11a and j the integer index of the personalization field, in which a different type of personalization value is stored. In some fields among the personalization fields T₁...Tₘ can be stored the Crypto Keys, in other fields the PIN numbers, the unique Id and other personalization data

Then the Chip Manufacturer 53 prepares in a step 120 a batch or batches of non-volatile memory images I, containing static images SI, and personalization images DI to be sent to the semiconductor fabrication plant 54 producing the integrated circuits.

The semiconductor fabrication plant 54 thus prepares in a step 130 integrated circuits 60, which are in this embodiment on wafers W, with personalized integrated circuit modules ready to be cut and soldered/embedded as eUICC in a device such as a SIM in a smartphone or tablet. Such integrated circuits 60 in general include at least a non-volatile memory, in which data images can be stored for programming the integrated circuit, and usually also a processing unit, as in the case of integrated circuit card for banking and communication application, e.g. UICC and eUICC.

The WLCSP process applied in the last step 130 described above has some constraints in providing the non-volatile memory images, which have to be provided as follows:
- one Static Image SI, corresponding to an invariant part of the non-volatile memory;
- a plurality of personalization images DI, each one corresponding to a final integrated circuit module, i.e., chip or die;

Also, there should not be overlap in the non-volatile memory between the Static Image and the respective personalization images in each module.

Personalisation by means of token methods may be using a subset of personalization data, which are transformed according to unknown rules, in particular unknown to the Chip Manufacturer, i.e., they represent so-called Unpredictable Personalization Data. Those data, in a non-token based personalization method would be conveyed by administrative APDUs (Application Protocol Data Unit), or commands. The unpredictability of data transformation, from the generated data to ones stored within non-volatile memory, may happen in case of third-party Applets or proprietary OS mechanisms.

In this case, a common scenario is that the Chip Manufacturer receives input files to generate the personalization data from the customer, e.g., OEMs, MNOs, Banks, Government, Transport Companies. Subsequently Chip Manufacturer generates personalization data. Then the Chip Manufacturer needs to produce Token Non-Volatile Memory (NVM) Images to be stored in a non-volatile memory of the secure element, in the example a eUICC.

If the personalization data are Unpredictable Personalization Data, a problem may arise in that the Chip Manufacturer, i.e., the secure element maker, cannot convert some Personalization Data into values to be put into Memory Image areas because the conversion function used is not known.

Personalizing a secure element by means of APDUs and retrieving the memory image is not feasible due to time consumption, or not allowed by production processes.

This kind of products can be issued by other techniques than Token based, i.e., via administrative APDUs/ commands, not feasible in case of WLCSP (Wafer Level Chip Scale Packaging).

Prior art document US2021/096178-A1 discloses a system and method for personalising integrated circuit cards.

### Summary

On the basis of the foregoing description, the need is felt for solutions which overcome one or more of the previously outlined drawbacks.

According to one or more embodiments, such an object is achieved through methods having the features specifically set forth in the claims that follow. Embodiments moreover concerns a related system for the personalization of integrated circuit cards module as well as a corresponding related computer program product, loadable in the memory of at least one computer and including software code portions for performing the steps of the method when the product is run on a computer. As used herein, reference to such a computer program product is intended to be equivalent to reference to a computer-readable medium containing instructions for controlling a computer system to coordinate the performance of the method. Reference to "at least one computer" is evidently intended to highlight the possibility for the present disclosure to be implemented in a distributed/modular fashion.

The claims are an integral part of the technical teaching of the disclosure provided herein.

As mentioned in the foregoing, the present disclosure provides solutions regarding a Method for introducing personalization data in non-volatile memories of a plurality of integrated circuit cards, in particular secure elements, in particular integrated circuit cards, by storing Token Non-Volatile Memory Images comprising
writing in the non-volatile memory of a given integrated circuit a static data image, corresponding to an invariant part of non-volatile memory common to said plurality of integrated circuits including an operating system, and
writing in the static data image a set of personalization data representing data specific of the given integrated circuit,
wherein said method includes
storing a subset of said set of personalization data in said non-volatile memories of a plurality of integrated circuits by
reserving an area of the non-volatile memory for said subset of personalization data,
storing commands, in particular APDU, configured to perform the writing of respective personalization data values in said subset of personalization data by corresponding applications and/or operative system stored in said integrated circuit,
said storing commands comprising converting said commands with a known coding obtaining an inner command script comprising said commands encoded therein and storing said inner command script in said area of the non-volatile memory for said subset of personalization data,
providing a decoding software module, in particular an application, which is configured to decode said inner command script obtaining said commands, in particular APDU, configured to perform the writing of personalization data values in said subset and to execute them,
at a subsequent activation of the integrated circuit by said decoding software module decoding and executing said inner command script.

In variant embodiments, said providing a decoding software module comprises storing in the non-volatile memory said decoding software module, in particular an application, which is configured to decode said inner command script obtaining said commands, in particular APDU, configured to perform the writing of personalization data values in said subset and to execute them.

In variant embodiments, said known coding is a Length Value coding (LV coding).

In variant embodiments, said method comprises deleting said decoding software module which is configured to decode the inner command script obtaining said commands, in particular APDU, configured to perform the writing of personalization data values in said subset and to execute them, and/or said inner command script.

In variant embodiments, said subset of personalization data is a subset of unpredictable personalization data which location and/or coding for storing in said static data image is not known.

In variant embodiments, if said set of personalization data comprises a further subset of predictable personalization data which storing location and/ or coding form in said static data image is known, storing said predictable personalization data by a substitution technique, writing the predictable personalization data images in the static data image at said known locations and with said known coding form.

In variant embodiments, said method comprises performing an encryption, in particular an AES encryption of the inner command script before storing in said area of the non-volatile memory for said subset of personalization data,
said software module being configured to decrypt said encryption, then to decode the decrypted inner command script and execute the corresponding commands.

In variant embodiments, a protection key of said encryption, in particular, AES encryption is supplied as predictable personalization data, accessible from said software module.

In variant embodiments, said Non-Volatile Memory (NVM) Images correspond to whole non-volatile memory images or SSP bundles or integrated circuit card software profiles.

The present disclosure provides also solutions regarding a system for introducing personalization data in non-volatile memories of a plurality of integrated circuits, including a chip manufacturer and a factory, configured to introduce personalization data in non-volatile memories of a plurality of integrated circuits according to the method of any of the embodiments.

In variant embodiments, said factory is configured to produce said integrated circuits according to WLCSP (Wafer Level Chip Scale Packaging) techniques, performing said writing operation on integrated circuits on a wafer.

The present disclosure provides also solutions regarding a computer-program product that can be loaded into the memory of at least one processor and comprises portions of software code for implementing the method of any of the previous embodiments.

### Brief description of the figures

Embodiments of the present disclosure will now be described with reference to the annexed drawings, which are provided purely by way of non-limiting example and in which:
- Figures 1 and 2 have already been described in the foregoing;

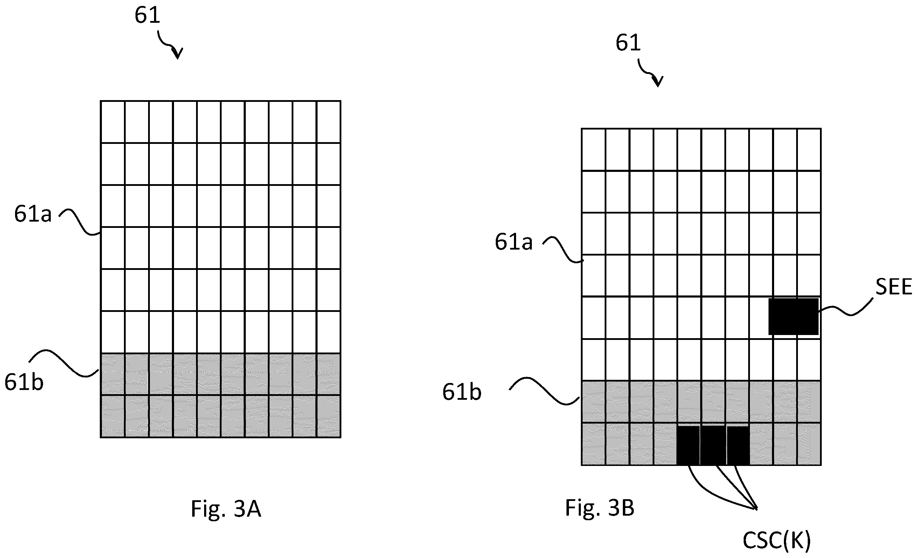

- Figure 3A and 3B shows a non-volatile memory of the integrated circuit in different phases of an embodiment of the method here described;

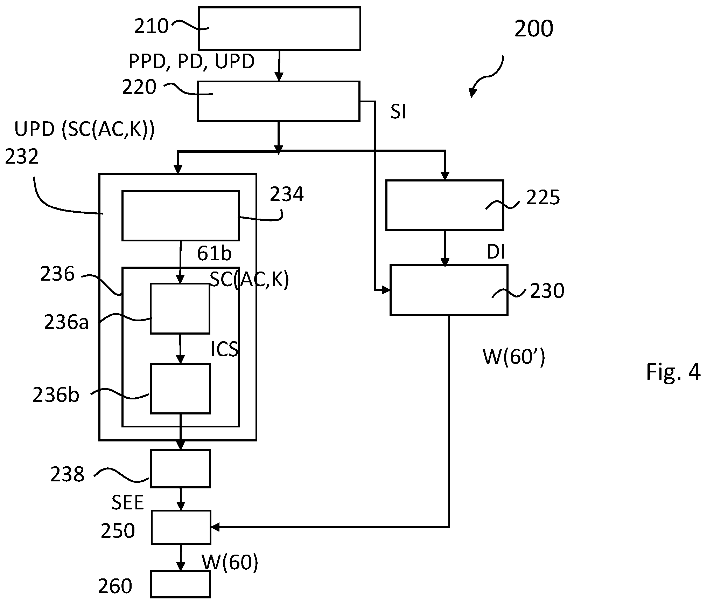

- Figure 4 shows a diagram flow illustrating an embodiment of the method here described;

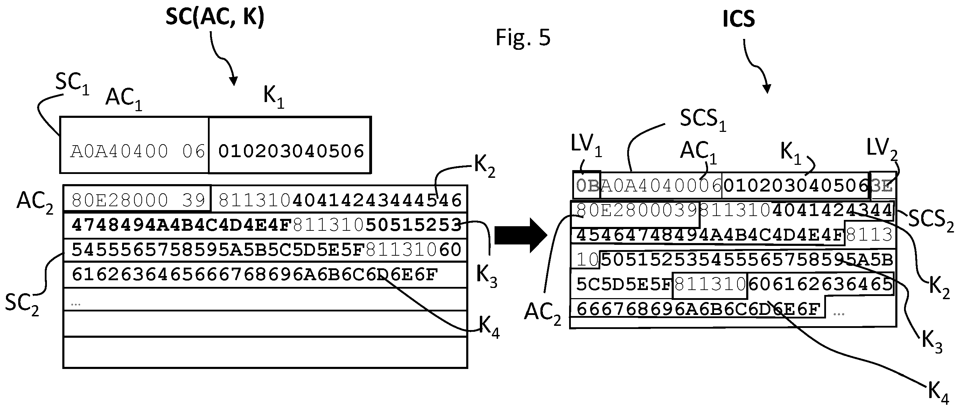

- Figure 5 shows a schematic representation of an encoding operation of an embodiment of the method here described;

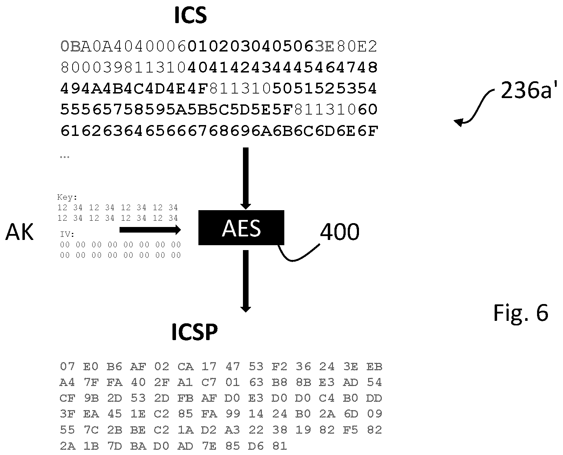

- Figure 6 shows a schematic representation of an optional encryption operation of an embodiment of the method here described.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

Figures parts, elements or components which have already been described with reference to Figures 1 and 2 are denoted by the same references previously used in such Figures; the description of such previously described elements will not be repeated in the following in order not to overburden the present detailed description.

The solution here described substantially regards a solution for introducing personalization data in non-volatile memories of a plurality of integrated circuit cards, in particular secure elements, in particular integrated circuit cards, by storing Token Non-Volatile Memory (NVM) Images comprising writing in the non-volatile memory of a given integrated circuit a static data image, corresponding to an invariant part of non-volatile memory common to said plurality of integrated circuits including an operating system, and

writing in the static data image a set of personalization data representing data specific of the given integrated circuit,
wherein said method includes
storing a subset of said set of personalization data in said non-volatile memories of a plurality of integrated circuits by
reserving an area of the non-volatile memory for said subset of personalization data,
storing commands, in particular APDU, configured to perform the writing of respective personalization data values in said subset by corresponding applications and/or operative system stored in said integrated circuit,
said storing commands comprising converting said commands with a known coding obtaining an inner command script comprising said commands encoded therein and storing said inner command script in said area of the non-volatile memory for said subset of said set of personalization data,
providing a decoding software module, in particular an application, which is configured to decode said inner command script obtaining said commands, in particular APDU, configured to perform the writing of personalization data values in said subset and to execute them,
at a subsequent activation of the integrated circuit by said decoding software module decoding and executing said inner command script, i.e., writing the personalization data in the non-volatile memory.

The subset of the set of personalization data comprises only unpredictable personalization data, i.e., personalization data which location and/or coding for storing in the non-volatile memory, in particular within the static data image, is not known, and the set of personalization data may comprise only such unpredictable personalization data. In variant embodiments, however, application of the solution here described to a set of personalization data comprising also predictable personalization data is not excluded, although the steps of storing by
reserving an area of the non-volatile memory for said subset of personalization data,
storing commands, in particular APDU, configured to perform the writing of respective personalization data values in said subset by corresponding applications and/or operative system stored in said integrated circuit,
said storing commands comprising converting said commands with a known coding obtaining an inner command script comprising said commands encoded therein and storing said inner command script in said area of the non-volatile memory for said subset of said set of personalization data,
providing a decoding software module, in particular an application, which is configured to decode said inner command script obtaining said commands, in particular APDU, configured to perform the writing of personalization data values in said subset and to execute them,
at a subsequent activation of the integrated circuit by said decoding software module decoding and executing said inner command script, i.e., writing the personalization data in the non-volatile memory storing reserving an area of the non-volatile memory for said subset of personalization data being however only dedicated to the subset of unpredictable personalization data.

The predictable personalization data may be stored by the prior art methods or other methods, possibly the most efficient.

Accordingly, the subset of the set of personalization data which comprises only unpredictable personalization data, may be a proper subset, e.g. the set of personalization data contains other personalization data, e.g. predictable personalization data, besides the subset of personalization data, in particular unpredictable personalization data, or an improper subset, i.e., the set of personalization data does not contain other personalization data besides the subset of personalization data, in particular unpredictable personalization data, i.e. the set and subset are congruent.

Here an embodiment is described with reference to the diagram flow, representing a method 200 of introducing personalization data in non-volatile memories of a plurality of integrated circuits comprising secure elements, in the example an eUICC using Third Party applets, according to embodiments.

The method 200 according to embodiments may comprise thus the following operations:
- in a step 210 a first entity, e.g., customer, e.g., the Mobile Network Operator 52, sends to a second entity, e.g. the Chip Manufacturer 53, an input file comprising a set of personalization data which comprises a subset of unpredictable personalization data UPD and may include pre-personalization data PPD. In the example, the set of personalization data includes also a subset of predictable personalization data PD, i.e., personalization data as those described with reference to figure 1, which memorization location in the data image SI is known. The unpredictable personalization data UPD are conveyed by sequences of commands, namely APDU, indicated with SC, which are configured to perform the writing of respective unpredictable input personalization data values, e.g. crypto keys, unique IDs, ..., which are specifically indicated, as values, with K, by corresponding applications, not shown, stored in said integrated circuit card 60; this can be performed for instance by personalization processes using APDUs as described in the "GlobalPlatform Card Specification" for instance in the example in Figure 7.3 of Version 2.3.1 (2018).

The sequence of commands SC may be a sequence of APDUs such as INSTALL [for personalization], SELECT and STORE DATA, processed by the application identified by Application Identifier (AID which transforms respective personalization data in said subset UPD. The APDUs, in a manner known per se, as indicated above, have the corresponding application or the operative system access the personalization data values and store them through the operative system where is deemed necessary by the application and with the required transformation, i.e., form of coding;
- the Chip Manufacturer 53 prepares then in a step 220 the static images SI of the cards. The memory images by way of non-limiting example may be represented by a non-volatile memory image, e.g., for performing a dump of such image in the memory, or by a SSP bundle or by an integrated circuit card, in particular eUICC, software profile. If the predictable personalization data PD are present then in a step 225 batch or batches of non-volatile memory images I, containing static images SI and personalization images DI obtained as described with reference to figure 1 are generated, to be sent to the semiconductor fabrication plant 54 producing the integrated circuits;
- the semiconductor fabrication plant 54 thus prepares in a step 230 integrated circuits with secure elements, e.g., eUICC, 60', which are in this embodiment on wafers W, with personalized integrated circuit modules ready to be cut and soldered/embedded as eUICC in a device such as a SIM in a smartphone or tablet. Such integrated circuits 60' in general include at least a non-volatile memory, in which data images can be stored for programming the integrated circuit, and usually also a processing unit, as in the case of integrated circuit card for banking and communication application, e.g., UICC, eUICC, SSP, software profiles and SSP bundles.

However, as mentioned, the subset of personalization data UPD, specifically unpredictable personalization data, are not stored in the integrated circuits 60' through step 230. It is noted that, in the case predictable personalization data PD are not present/to be stored, i.e., there are only unpredictable personalization data UPD to personalize the cards, the integrated circuits 60' from step 230 contains only static images SI (with operating system and other software, e.g., applications).

To store the unpredictable personalization data UPD in the final integrated circuit card 60, which is operative with all the necessary personalization data, e.g. crypto keys, stored in the required locations of the memory of the card, after step 220 the unpredictable personalization data UPD, which comprises sequence of commands, specifically of APDUs, comprising commands, in particular in the example APDUs, AC (a sequence SC may comprise one or more APDU AC as exemplified with reference to figure 5) and unpredictable personalization data values K (see figure 5) are sent to an operation 232, described with reference to figures 3A and 3B showing schematically a non-volatile memory 61 of an integrated circuit card 60 in two different sub-steps of operation 231, of storing 212 said subset of unpredictable personalization data UPD in the non-volatile memories 61 of a plurality of integrated circuits 60 by
- reserving 234 an area 61b of the non-volatile memory 61 for the subset of unpredictable personalization data UPD (as depicted in figure 3A),
- storing 236 sequences of commands SC(K), in particular APDU, configured to perform the writing of respective unpredictable personalization data values K in such subset UPD by corresponding applications stored in said integrated circuit card 60,
- such operation of storing commands 236 comprising
   ∘ converting 236a said sequence of commands SC(AC,K) by a known coding, for instance a length value (LV) coding, obtaining an inner command script ICS comprising such sequence of commands SC encoded therein (as coded sequence of commands SCS, as shown in figure 5), and
   ∘ storing 236b such inner command script ICS in said area of the non-volatile memory 61b for such unpredictable personalization data UPD,
the method 200 then comprises:
- providing, specifically in the example storing 238 in the non-volatile memory 61, in particular in an area 61a which is not reserved to unpredictable personalization data UPD and their sequence of commands SC, a decoding software module SEE, which is a script execution unit, in particular an application or an applet, which is configured to decode such inner command script ICS, e.g. decode the length value coding, obtaining said sequence of commands SC, in particular APDU, configured to perform the writing of said unpredictable personalization data values K and to execute such sequence of commands SC. As mentioned, in variant embodiments, operation 238 may comprise instead of storing it in the area 61a, providing a decoding software module SEE separated with respect to the integrated circuit 60, e.g., a companion module,

Therefore, at a subsequent activation of the integrated circuit by said decoding software module, the method 200 comprises performing an operation 250 of decoding and executing such inner command script ICS with respect to the integrated circuit card 60' comprising at least the static image SI as outputted by operation 220 or the static image with personalization data images DI from operation 230, and comprising stored the third-party applications or other application which operation with respect to the personalization data is unknown.

Operation 250 determines, as mentioned, that the sequences of commands SC of subset UPD when executed make the corresponding third party applications or applets or the operative system, identified in such APDUs, access the corresponding unpredictable personalization data values K, that the applications then may store or install in the locations of the static memory SI which are required by the applications themselves, without need for the Chip Manufacturer 53 to know such locations prior the activation of the integrated circuit cards 60.

Therefore, the unpredictable personalization data values K are generated internally to the IC card at the first activation and stored, according to mechanisms that can be ignored by the Chip Manufacturer 53.

With 260 is indicated an optional operation of deletion of the software module SEE and/or of the inner command script ICS to free some memory in the non-volatile memory 61. As mentioned in figure 3A is shown the memory 61 after the reservation step 234 with the reserved area 61b of the non-volatile memory 61 for the subset of unpredictable personalization data UPD, while in figure 3B it is shown the memory 61 after the step 238, i.e., with the software module SEE and inner command script ICS (i.e., sequence of encoded commands SCS(K)), stored. With step 260 the reserved area 61b of the non-volatile memory may be freed of such software and data, SEE, ICS and become available as the unreserved area 61a for storing other software and modules.

In figure 5 is exemplified the step 236 of encoding of the sequence of commands SC as inner command script ICS.

A sequence of commands SC comprising a first command SC₁ and a second command SC₂ is shown. The first command, SC₁ is an APDU, in particular a SELECT APDU, AC₁ which operates on one personalization data value K₁. Then a second commands SC₂ comprise an APDU, AC₂, in particular a STORE DATA APDY, which operates on three personalization data values K₂, K₃, K₄.

For instance, the APDU AC₁ is 'A0A40400 06' (where 06 indicates a field length before the TLV encoded data) while the corresponding personalization data values K₁ is '010203040506'. The command SC₂ includes the APDU
AC₂='80E28000 39',
with respective personalization data values
K₂= '04142434445464748494A4B4C4D4E4F',
K₃= '505152535455565758595A5B5C5D5E5F',
K₄= '606162636465666768696A6B6C6D6E6F'.

It has to be specified that in the example shown the personalization data values before applying the length value encoding 236, in the sequence of commands SC (AC, K) are already TLV (Tag Length Value) encoded, as prescribed for instance by the "GlobalPlatform Card Specification" for the data field of APDUs. For instance, '811310' in the command SC₂ is part of the TLV encoding of the personalization data K₂, i.e., '81131004142434445464748494A4B4C4D4E4F' is a structured data which includes the personalization data K₂ with the TLV encoding.

AS shown, the length value encoding 236 transforms the sequence of commands SC, in a string where coded commands SCS1, SCS2 are queued one after the other, each containing command SC1, SC2, preceded by the length value LV1, LV2, and with the respective personalization data value K₁ or K₂, K₃, K₄, in particular TLV encoded.

The resulting command script ICS in the example is '0BA0A40400060102030405063E80E2800039811310404142434445 464748494A4B4C4D4E4F811310505152535455565758595A5B5C5D5 E5F811310606162636465666768696A6B6C6D6E6F ...' with LV1=0B, LV2=3E.

Other encoding form besides LV encoding may be used to obtain the inner script ICS from the sequence of commands SC, for instance a coding according to the specification 3GPP TS 51.013 V17.0.0 (2022-04), in particular as defined in Annex B "Script file syntax and format description », pages 464-466.

In figure 6 it is schematized an optional protection step 236a', which may occur after the step 236a of generation of the inner command script ICS. In order to avoid that the personalization data values K, conveyed by the script inner command script ICS, are present in plaintext, a protection mechanism can be applied, such as encryption, for instance AES encryption 400 applied to the entire inner command script ICS. The module SEE is then further configured to perform AES decryption, before decoding, e.g., LV decoding the inner command script ICS and then executing it. The AES protection key AK used by the AES process may be diversified between the secure elements as a conventional/predictable Personalization Data PD.

In variant embodiments, ECC (Error Correction Code) for protection may be applied in a similar way to encryption.

In variant embodiments, also compression techniques, such as zipping may be applied to the inner command script ICS, although in this case resources have to be allocated for the decompression/unzipping.

In variant embodiments, the decoding software module SEE may be a companion module, i.e., not stored in the non- volatile memory but available as a side module, e.g., available to the manufacture as a discrete module, although this would mean that the module is not ready just after switch on, i.e., activation.

In variant embodiments, Memory Images may be sent as batches to modules 53/54, or singularly via OTA (On The Air) provisioning to each device, e.g., mobile equipment.

Of course, without prejudice to the principle of the invention, the details of construction and the embodiments may vary widely with respect to what has been described and illustrated herein purely by way of example, without thereby departing from the scope of the present invention, as defined by the ensuing claims.

The method here described in particular can be applied to the introduction of personalization data in integrated circuits for smart cards like UICC, eUICC and iUICC, but also in variant embodiments to integrated circuits for other device such as Secure Elements, NFC (Near Field Communication) tags, SSP, which have a non-volatile memory to be programmed with personalization data.

The method here described in particular can be applied to the introduction of personalization data pertaining profiles in smart card or software bundles.

Also, while a preferred embodiment provides that the integrated circuits are produced by a WLCSP, Wafer Level Chip Scale Packaging, so that the method of introduction of personalization data here described can be performed while the integrated circuit is still on the wafer, and then it is cut and possibly soldered on a plastic support or in place in a device, however the method here described can be applied also to an integrated circuit already separated by the wafer, in particular already mounted on the support or embedded in a device.

## Claims

1. Method for introducing personalization data in non-volatile memories of a plurality of integrated circuit cards, in particular secure elements, in particular integrated circuit cards, by storing Token Non-Volatile Memory (NVM) Images, comprising
writing in the non-volatile memory (61) of a given integrated circuit (60) a static data image (SI), corresponding to an invariant part of non-volatile memory (61) common to said plurality of integrated circuits (60) including an operating system, and
writing in the static data image (SI) a set of personalization data (DI, PD, UPD) representing data specific of the given integrated circuit (60),
wherein said method includes
storing (232) a subset (UPD) of said set of personalization data (DI, PD, UPD) in said non-volatile memories of a plurality of integrated circuits by
reserving (234) an area (61b) of the non-volatile memory for said subset (UPD) of personalization data,
storing (236) Application Protocol Data Unit (APDU) commands, configured to perform the writing of respective personalization data values (K) in said subset (UPD) by corresponding applications and/or operative system stored in said integrated circuit (60),
said storing (236) APDU commands comprising converting (236a) said APDU commands with a known coding obtaining an inner command script (ICS) comprising said APDU commands encoded therein and storing (236b) said inner command script in said area (61b) of the non-volatile memory for said subset (UPD) of personalization data,
providing (238) a decoding software module (SEE), in particular an application, which is configured to decode said inner command script (ICS) obtaining said APDU commands (SC(AC,K)), configured to perform the writing of personalization data values in said subset (UPD) and to execute them,
at a subsequent activation of the integrated circuit by said decoding software module (SEE) decoding (250) and executing said inner command script (ICS).

2. Method according to claim 1, wherein said providing (258) a decoding software module (SEE) comprises storing in the non-volatile memory (61) said decoding software module (SEE), in particular an application, which is configured to decode said inner command script ((ICS) obtaining said APDU commands (SC(AC,K)) configured to perform the writing of personalization data values in said subset (UPD) and to execute them.

3. Method according to claim 1 or 2, wherein said known coding is a length value coding.

4. Method according to claim 2 or 3, wherein said method comprises deleting (260) said decoding software module (SEE) which is configured to decode the inner command script (ICS) obtaining said APDU commands (SC(AC,K)) configured to perform the writing of personalization data values in said subset (UPD) and to execute them, and/or said inner command script (ICS).

5. Method according to any of the previous claims, wherein said subset (UPD) of personalization data (DI, PD, UPD) is a subset of unpredictable personalization data (UPD) which location and/or coding for storing in said static data image (SI) is not known.

6. Method according to claim 1, wherein if said set of personalization data comprises a further subset of predictable personalization data which storing location and/ or coding form in said static data image (SI) is known, storing said predictable personalization data by a substitution technique (225, 230), writing the predictable personalization data images (DI) in the static data image (SI) at said known locations and with said known coding form.

7. Method according to claim 1, wherein said method comprises performing (236a') an encryption, in particular an AES encryption (400) of the inner command script (ICS) before storing in said area (61b) of the non-volatile memory for said subset (UPD) of personalization data,
said software module (SEE) being configured to decrypt said encryption, then to decode the decrypted inner command script (ICS) and execute the corresponding commands.

8. Method according to claim 6, wherein a protection key (AK) of said encryption, in particular AES encryption, is supplied as predictable personalization data, accessible from said software module (SEE).

9. Method according to any of the preceding claims, wherein said Non-Volatile Memory (NVM) Images correspond to whole non-volatile memory images or SSP bundles or integrated circuit card software profiles.

10. A system for introducing personalization data in non-volatile memories of a plurality of integrated circuits, including a chip manufacturer (53) and a factory (54), configured to introduce personalization data in non-volatile memories of a plurality of integrated circuits according to the method of any of the previous claims 1 to 9.

11. A system according to claim 10, wherein said factory (54) is configured to produce said integrated circuits according to WLCSP (Wafer Level Chip Scale Packaging) techniques, performing said writing operation on integrated circuits on a wafer (W).

12. A computer-program product loadable in the memory of at least one computer and including software code portions adapted for performing the steps of the method claims 1 to 9 when the product is run on the computer.

## Patentansprüche

1. Verfahren zum Einbringen von Personalisierungsdaten in nichtflüchtige Speicher einer Vielzahl von integrierten Chipkarten, insbesondere von sicheren Elementen, insbesondere von integrierten Chipkarten, durch Speichern von "Token Non-Volatile Memory"(NVM)-Bildern, umfassend:
Schreiben eines statischen Datenbilds (SI) in den nichtflüchtigen Speicher (61) einer bestimmten integrierten Schaltung (60), das einem invarianten Teil des nichtflüchtigen Speichers (61) entspricht, der der Vielzahl von integrierten Schaltungen (60) gemeinsam ist und ein Betriebssystem einschließt, und
Schreiben eines Satzes von Personalisierungsdaten (DI, PD, UPD), die spezifische Daten der gegebenen integrierten Schaltung (60) darstellen, in das statische Datenbild (SI), wobei das Verfahren einschließt:
Speichern (232) eines Teilsatzes (UPD) von Personalisierungsdaten (DI, PD, UPD) in den nichtflüchtigen Speichern einer Vielzahl von integrierten Schaltungen durch das
Reservieren (234) eines Bereichs (61b) des nichtflüchtigen Speichers für den Teilsatz (UPD) von Personalisierungsdaten,
Speichern (236) von Application Protocol Data Unit (APDU)-Befehlen, die so konfiguriert sind, dass sie das Schreiben von jeweiligen Personalisierungsdatenwerten (K) in den Teilsatz (UPD) durch entsprechende Anwendungen und/oder das in der integrierten Schaltung (60) gespeicherte Betriebssystem durchführen,
wobei das Speichern (236) von APDU-Befehlen das Konvertieren (236a) der APDU-Befehle mit einer bekannten Codierung, das Erhalten eines inneren Befehlsskripts (ICS), das die darin codierten APDU-Befehle umfasst, und das Speichern (236b) des inneren Befehlsskripts in dem Bereich (61b) des nichtflüchtigen Speichers für den Teilsatz (UPD) der Personalisierungsdaten umfasst,
Bereitstellen (238) eines Decodierungs-Softwaremoduls (SEE), insbesondere einer Anwendung, die so konfiguriert ist, dass sie das innere Befehlsskript (ICS) decodiert, das die APDU-Befehle (SC(AC,K)) erhält, und so konfiguriert ist, dass sie das Schreiben von Personalisierungsdatenwerten in den Teilsatz (UPD) durchführt und diese ausführt,
bei einer anschließenden Aktivierung der integrierten Schaltung durch das Decodierungs-Softwaremodul (SEE), Decodieren (250) und Ausführen des inneren Befehlsskripts (ICS).

2. Verfahren nach Anspruch 1, wobei das Bereitstellen (258) eines Decodierungs-Softwaremoduls (SEE) das Speichern des Decodierungs-Softwaremoduls (SEE) in dem nichtflüchtigen Speicher (61) umfasst, insbesondere einer Anwendung, die so konfiguriert ist, dass sie das innere Befehlsskript (ICS) decodiert und die APDU-Befehle (SC(AC,K)) erhält, die so konfiguriert sind, dass sie das Schreiben von Personalisierungsdatenwerten in den Teilsatz (UPD) durchführen und diese ausführen.

3. Verfahren nach Anspruch 1 oder 2, wobei die bekannte Codierung eine Längenwertcodierung ist.

4. Verfahren nach Anspruch 2 oder 3, wobei das Verfahren das Löschen (260) des Decodierungs-Softwaremoduls (SEE), das so konfiguriert ist, dass es das innere Befehlsskript (ICS) decodiert, das die APDU-Befehle (SC(AC,K)) erhält, die so konfiguriert sind, dass sie das Schreiben von Personalisierungsdatenwerten in dem Teilsatz (UPD) durchführen und diese ausführen, und/oder des inneren Befehlsskripts (ICS) umfasst.

5. Verfahren nach einem der vorhergehenden Ansprüche, wobei der Teilsatz (UPD) von Personalisierungsdaten (DI, PD, UPD) ein Teilsatz von unvorhersehbaren Personalisierungsdaten (UPD) ist, deren Speicherort und/oder Codierung für die Speicherung in dem statischen Datenbild (SI) nicht bekannt ist.

6. Verfahren nach Anspruch 1, wobei, wenn der Satz von Personalisierungsdaten einen weiteren Teilsatz von vorhersagbaren Personalisierungsdaten umfasst, deren Speicherort und/oder Codierungsform in dem statischen Datenbild (SI) bekannt ist, die vorhersagbaren Personalisierungsdaten durch ein Substitutionsverfahren (225, 230) gespeichert werden und die vorhersagbaren Personalisierungsdatenbilder (DI) in das statische Datenbild (SI) an den bekannten Speicherorten und mit der bekannten Codierungform geschrieben werden.

7. Verfahren nach Anspruch 1, wobei das Verfahren das Durchführen (236a') einer Verschlüsselung, insbesondere einer AES-Verschlüsselung (400) des inneren Befehlsskripts (ICS), vor dem Speichern in dem Bereich (61b) des nichtflüchtigen Speichers für den Teilsatz (UPD) von Personalisierungsdaten umfasst,
wobei das Softwaremodul (SEE) so konfiguriert ist, dass es die Verschlüsselung entschlüsselt, dann das entschlüsselte innere Befehlsskript (ICS) entschlüsselt und die entsprechenden Befehle ausführt.

8. Verfahren nach Anspruch 6, wobei ein Schutzschlüssel (AK) der Verschlüsselung, insbesondere der AES-Verschlüsselung, als vorhersagbare Personalisierungsdaten bereitgestellt wird, auf die von dem Softwaremodul (SEE) aus zugegriffen werden kann.

9. Verfahren nach einem der vorhergehenden Ansprüche, wobei die "Non-Volatile Memory"(NVM)-Bilder ganzen nichtflüchtigen Speicherbildern oder SSP-Bündeln oder Softwareprofilen für integrierte Chipkarten entsprechen.

10. System zum Einführen von Personalisierungsdaten in nichtflüchtige Speicher einer Vielzahl von integrierten Schaltungen, einschließlich eines Chipherstellers (53) und einer Fabrik (54), konfiguriert zum Einführen von Personalisierungsdaten in nichtflüchtige Speicher einer Vielzahl von integrierten Schaltungen nach dem Verfahren nach einem der vorhergehenden Ansprüche 1 bis 9.

11. System nach Anspruch 10, wobei die Fabrik (54) so konfiguriert ist, dass sie die integrierten Schaltungen nach WLCSP-Verfahren (Wafer Level Chip Scale Packaging) herstellt und den Schreibvorgang an integrierten Schaltungen auf einem Wafer (W) durchführt.

12. Computerprogrammprodukt, das in den Speicher mindestens eines Computers geladen werden kann und Softwarecodeabschnitte einschließt, die dazu ausgelegt sind, die Schritte des Verfahrens nach einem der Ansprüche 1 bis 9 durchzuführen, wenn das Produkt auf dem Computer ausgeführt wird.

## Revendications

1. Procédé d'introduction de données de personnalisation dans des mémoires non volatiles d'une pluralité de cartes à circuits intégrés, en particulier des éléments de sécurité, en particulier des cartes à circuits intégrés, en stockant des images de mémoire non volatile (NVM) à jeton, comprenant
d'écrire dans la mémoire non volatile (61) d'un circuit intégré (60) donné une image de données statique (SI), correspondant à une partie invariante de mémoire non volatile (61) commune à ladite pluralité de circuits intégrés (60) incluant un système d'exploitation, et
d'écrire dans l'image de données statique (SI) un ensemble de données de personnalisation (DI, PD, UPD) représentant des données spécifiques du circuit intégré (60) donné,
dans lequel ledit procédé inclut
de stocker (232) un sous-ensemble (UPD) dudit ensemble de données de personnalisation (DI, PD, UPD) dans lesdites mémoires non volatiles d'une pluralité de circuits intégrés en
réservant (234) une zone (61b) de la mémoire non volatile pour ledit sous-ensemble (UPD) de données de personnalisation
stockant (236) des commandes d'unité de données de protocole d'application (APDU), configurées pour réaliser l'écriture de valeurs de données de personnalisation (K) respectives dans ledit sous-ensemble (UPD) par des applications correspondantes et/ou un système d'exploitation stocké dans ledit circuit intégré (60),
ledit stockage (236) de commandes APDU comprenant de convertir (236a) lesdites commandes APDU avec un codage connu obtenant un script de commandes internes (ICS) comprenant en lui lesdites commandes APDU codées et de stocker (236b) ledit script de commandes internes dans ladite zone (61b) de la mémoire non volatile pour ledit sous-ensemble (UPD) de données de personnalisation,
fournissant (238) un module logiciel de décodage (SEE), en particulier une application, qui est configuré pour décoder ledit script de commandes internes (ICS) obtenant lesdites commandes APDU (SC(AC, K)), configurées pour réaliser l'écriture de valeurs de données de personnalisation dans ledit sous-ensemble (UPD) et pour les exécuter,
lors d'une activation ultérieure du circuit intégré par ledit module logiciel de décodage (SEE) de décoder (250) et d'exécuter ledit script de commandes internes (ICS).

2. Procédé selon la revendication 1, dans lequel ladite fourniture (258) d'un module logiciel de décodage (SEE) comprend de stocker dans la mémoire non volatile (61) ledit module logiciel de décodage (SEE), en particulier une application, qui est configuré pour décoder ledit script de commandes internes (ICS) obtenant lesdites commandes APDU (SC(AC, K)) configurées pour réaliser l'écriture de valeurs de données de personnalisation dans ledit sous-ensemble (UPD) et pour les exécuter.

3. Procédé selon la revendication 1 ou 2, dans lequel ledit codage connu est un codage longueur valeur.

4. Procédé selon la revendication 2 ou 3, dans lequel ledit procédé comprend d'effacer (260) ledit module logiciel de décodage (SEE) qui est configuré pour décoder le script de commandes internes (ICS) obtenant lesdites commandes APDU (SC(AC, K)) configurées pour réaliser l'écriture de valeurs de données de personnalisation dans ledit sous-ensemble (UPD) et pour les exécuter, et/ou ledit script de commandes internes (ICS).

5. Procédé selon l'une quelconque des revendications précédentes, dans lequel ledit sous-ensemble (UPD) de données de personnalisation (DI, PD, UPD) est un sous-ensemble de données de personnalisation non prévisibles (UPD) dont l'emplacement et/ou le codage pour stocker dans ladite image de données statique (SI) n'est pas connu.

6. Procédé selon la revendication 1, dans lequel si ledit ensemble de données de personnalisation comprend un autre sous-ensemble de données de personnalisation prévisibles dont l'emplacement de stockage et/ou la forme de codage dans ladite image de données statique (SI) est connu, stocker lesdites données de personnalisation prévisibles par une technique de substitution (225, 230), écrire les images de données de personnalisation prévisibles (DI) dans l'image de données statique (SI) aux mêmes dits emplacements connus et avec ladite forme de codage connue.

7. Procédé selon la revendication 1, dans lequel ledit procédé comprend de réaliser (236a') un cryptage, en particulier un cryptage AES (400) du script de commandes internes (ICS) avant le stockage dans ladite zone (61b) de la mémoire non volatile pour ledit sous-ensemble (UPD) de données de personnalisation,
ledit module logiciel (SEE) étant configuré pour décrypter ledit cryptage, puis décoder le script de commandes internes (ICS) décrypté et exécuter les commandes correspondantes.

8. Procédé selon la revendication 6, dans lequel une clé de protection (AK) dudit cryptage, en particulier cryptage AES, est fournie comme données de personnalisation prévisibles, accessible depuis ledit module logiciel de décodage (SEE).

9. Procédé selon l'une quelconque des revendications précédentes, dans lequel lesdites images de mémoire non volatile (NVM) correspondent à toutes les images de mémoire non volatile ou faisceaux SSP ou profils de logiciel de carte de circuit intégré.

10. Système pour introduire des données de personnalisation dans des mémoires non volatiles d'une pluralité de circuits intégrés, incluant un fabriquant de puces (53) et une usine (54), configuré pour introduire des données de personnalisation dans des mémoires non volatiles d'une pluralité de circuits intégrés suivant le procédé selon l'une quelconque des revendications 1 à 9.

11. Système selon la revendication 10, dans lequel ladite usine (54) est configurée pour produire lesdits circuits intégrés selon les techniques WLCSP (encapsulation à l'échelle de la puce au niveau de la plaquette), réalisant ladite opération d'écriture sur des circuits intégrés sur une plaquette (W).

12. Produit de programme informatique pouvant être chargé dans la mémoire d'au moins un ordinateur et incluant des parties de code de logiciel conçues pour réaliser les étapes du procédé selon les revendications 1 à 9 quand on fait tourner le produit sur l'ordinateur.
